# EUROPEAN PATENT SPECIFICATION

(11) **EP 0 376 936 B1**
(45) Date of publication and mention of the grant of the patent: **03.04.1996**
(21) Application number: 90300025.5
(22) Date of filing: 02.01.1990
(51) Int. Cl.: C08F 4/638, C08F 4/63, C08F 10/00

(54) **A ziegler-Natta catalyst component**
Ein Ziegler-Nattakatalysatorbestandteil
Un composant de catalyseur Ziegler-Natta

(30) Priority: 30.12.1988 FI 886056
(43) Date of publication of application: 04.07.1990
(73) Proprietor: BOREALIS A/S, DK-2800 Lyngby (DK)
(72) Inventor: Korvenoja, Tarja, SF-00250 Helsinki (FI); Kostiainen, Arja, SF-06400 Porvoo (FI); Iiskola, Eero, SF-00610 Porvoo (FI); Sormunen, Pekka, SF-06100 Porvoo (FI); Gustafsson, Bill, SF-06150 Porvoo (FI); Knuuttila, Hilkka, SF-06400 Porvoo (FI); Palmqvist, Ulf, Stenungsund (SE)
(74) Representative: Sheard, Andrew Gregory

(56) References cited:
- EP-A- 0 243 327
- WO-A-87/07620
- US-A- 4 071 674
- PATENT ABSTRACTS OF JAPAN vol. 10, no. 148 (C-350)(2205) 29 May 1986, & JP-A- 61 9409

## Description

The invention relates to a method for the preparation of a supported procatalyst aimed for the polymerization of olefines, in which particles are formed of halides and alcohol, the particles are reacted with an organic compound of a metal of the groups 1A to 3A, the thus obtained product in particle form is activated by means of a titanium and/or vanadium compound and optionally a donor, and optionally a prepolymerization is carried out for the activated particles. The invention relates, furthermore, to the specific use of the procatalyst prepared by such a method for the polymerization of alpha-olefins. By procatalyst is meant in this context that part of the Ziegler-Natta catalyst which is based on the transition metal and which before the polymerization is combined with an organic compound of aluminum or an other metal acting as a cocatalyst.

Methods of the kind mentioned for the preparation of a procatalyst are known in the literature. Through JP 59-215301 is known a method for the polymerization or copolymerization of ethylene, in which the procatalyst was prepared by bringing together a hot hydrocarbon emulsion of magnesium dichloride, ethanol and the emulgator and a cold liquid consisting of the same hydrocarbon. As a result spheroidal carrier was formed, the particles of which varied between 53 - 105 micrometers in diameter. The carrier was not preactivated with a organometallic compound, but the activation was carried out directly by suspending it at room temperature into titanium tetrachloride, after which electron donor was, moreover, added to the mixture. The procatalyst obtained by the emulgation solidification technique was especially well suited for the polymerization and copolymerization of ethylene.

Through the U.S. patent specification 4,506,027 is known a method for the preparation of a procatalyst, in which a solid carrier is produced first by spray drying the liquid, in which the magnesium chloride is dissolved in a mixture of ethanol and methanol. The ethanol and methanol hydroxyl containing carrier was then activated without any preactivation with titanium and vanadium halides. The result was a procatalyst, which combined with an organoaluminum compound acting as a cocatalyst worked well as a polymerization catalyst of alpha-olefins.

FI application print 862459 presents the preparation of a procatalyst by spray crystallization of a mixture of magnesium dihalide and alcohol to a crystalline complex compound, the particles of which have in comparison with the previously mentioned method freer hydroxyl groups. The final procatalyst was obtained by activating the spray crystallized product with a tetravalent titanium compound.

The above-presented methods for the preparation of procatalysts belonging to the prior art represent the highest catalyst morphologic technique, but they do not represent the highest chemical modifying technique of procatalysts for according to the U.S. patent specification 4,071,674 it is advantageous to treat the carrier formed of magnesium dihalide and alcohol with an organic compound of a metal like aluminum before activating it with a transition metal compound like titanium. According to the teachings of this publication the capacity of activation and the activity of the final procatalyst particles increases due to this extra organometallic compound treatment. A drawback of this method is, however, that no attention has been paid to the morphology of the adduct of magnesium dichloride and alcohol. Thus, according to the examples of the publication the adduct is prepared by suspending the dry magnesium dihalide into hydrocarbon, after which the alcohol is added dropwise. As a result adduct product particles crystallizing
from the reaction solution were produced.

It can thus be said that of the two categories of prior art one is paying attention to the morphology of the magnesium dihalide - alcohol adduct and the other pays attention to the chemical preactivation of the adduct by means of an organometallic compound. Thus, the problem of the invention is how to combine these two ways of improvement, which are so important for the activity of the procatalyst.

Accordingly, the aim of the invention is to provide a procatalyst having a suitable morphology and which, simultaneously, has been preactivated with an organic compound of a metal like aluminum before it is activated with a transition metal compound. A further aim of the invention is to find the type of olefin polymerization for which the new, improved catalyst is best suitable. The procatalyst has been provided by a method for the preparation of a supported procatalyst aimed for the polymerization of olefines,
the method comprising:
a) forming particles of anhydrous and dry magnesium dihalide and alcohol;
b) reacting the particles with an organic compound of a metal from the groups 1A to 3A;
c) activating the particle product obtained from the stage b) by means of titanium and/or vanadium compound and optionally an electron donor; and
d) optionally carrying out a prepolymerization for the activated particles;
characterized in that the particles of the stage a) are formed by spray crystallization (spray freezing) a mixture of the magnesium dihalide and the alcohol into complex particles and then carrying out the stages b), c) and d) for the complex particles.

The method is based on the realisation that an adduct of magnesium dihalide and an alcohol must contain a large amount of hydroxyl groups in order that its preactivation according to stage b) with the organic compound of a metal of the groups 1A to 3A would be successful. A sufficiently large number of hydroxyl groups and a satisfactory morphology can only be provided by means of spray crystallization. It is true that the U.S. patent specification 4,071,674 presents preactivation of an adduct with an abundance of hydroxyl with an organometallic compound, but the morpohology of the carrier particles formed has not been considered at all in the publication.

An advantageous use has, moreover, been found for the procatalyst prepared according to the method, i.e. for the preparation of ethylene having a narrow molecular weight distribution. From the narrow molecular weight distribution of polyethylene follows, furthermore, that the procatalyst according to the invention is particularly suitable for a multiple stage, preferably two stage polymerization giving polyethylene having a specific molecular weight distribution, in the various stages of which is used different contents of hydrogen controlling the molecular weight.

According to the present invention the magnesium dihalide carrier must first be activated to a suitable crystal form by complexing it with a crystal solvent. This takes place so that its particles are formed by spray crystallizing a mixture of magnesium dihalide and alcohol into crystalline complex particles of magnesium dihalide and alcohol. The spray crystallization is preferably carried out by heating alcohol solvated magnesium dihalide to a homogenic liquid and by spraying then the liquid by means of hot spraying gas into a cooled spray chamber, where the carrier complex particles of the magnesium halide and the alcohol are formed, the alcohol not being essentially volatilized. The spray crystallization is carried out by using gases which are inert with regard to the reaction components.

The magnesium dihalide shall be anhydrous and dry. The most preferable magnesium dihalide is magnesium dichloride. Alcohols have been found to be preferable crystal solvents, preferably aliphatic alcohols, the most preferable dry (anhydric) absolute ethanol or a dry mixture thereof. Ethanol forms with magnesium dichloride a crystalline complex MgCl₂ x aEtOH, in which a is 0 to 6, preferably 2 to 6, and most preferably 3. Then the carrier complex is melted and sprayed into cold, inert gas being crystallized without vaporization of the crystal solvent. This spray crystallization of the carrier thus takes place by essentially similar mechanism as has been presented in our Finnish patent application FI-862459.

In spray crystallization the jet spraying of the melt complex takes place into cooled gas, so no transfer of substance or volatilization is taking place and the congealing melt is crystallized when sprayed to its original composition. In the spray drying process according to the U.S. patent specification 4,506,027, on the other hand, considerable volatilization of alcohol is taking place and the product formed there has essentially less alcohol hydroxyl groups.

In the second stage the spray crystallized complex of magnesium dihalide and alcohol is reacted in the form of particles with an organic compound of a metal of the groups 1A to 3A of the periodic system. The organometal compound is e.g. a compound according to the formula RM, in which R is an alkyl or an aryl group and M is lithium sodium or potassium; a compound according to the formula R₂M', in which R is the same as before and M' is zinc or cadmium; a compound according to the formula R_{2-L}MgX_{L}, in which R is the same as before, X is a halogen atom and L is 0 or 1; a compound according to the formula MAlR₄, in which R and M are the same as above the compounds according to the formula R'₃₋ₘAlXₘ, in which R' is a hydrogen atom, an alkyl group or an aryl group, X is the same as before and m is 0 or a positive number lower than 3; compounds according to the formula R'₃₋ₙAl (OR)ₙ, in which R' and R are the same as before and n is a positive number greater than 0 but smaller than 3; or the compounds according to the formula RAl(OR)X, in which R and X are also the same as defined above. R and R' are preferably alkyl groups containing 1 to 12 carbon atoms, phenyl or benzyl groups and X is preferably chlorine or bromine. The most preferable are the organoaluminum compounds having the formula R'₃₋ₘAlXₘ, e.g. trialkylaluminium.

The treatment with an organometallic compound simply takes place by bringing the catalyst complex particles prepared by spray crystallization into contact with an organometallic compound, such as aluminum alkyl. The treatment is preferably carried out at a temperature of -10 to +30°C and it preferably lasts about 30 to 180 minutes. The aluminum/ethanol proportion is preferably 0.5 to 2, most preferably 1. The treatment leads to the essentially quantitative removal of the crystal solvent i.e. the alcohol, and the result is an amorphic, preactivated carrier with a very large surface area.

The actual activation of the preactivated complex particles takes place by means of a titanium and/or vanadium compound and optionally an electron donor. The preactivated carrier is lead into contact with the transition metal compound mentioned, whereby catalytically active complexes between the magnesium dihalide, such as magnesium dichloride, and the transition metal compound, such as a titanium compound, are formed on the surface of the carrier. By selecting suitable titanium compounds, procatalysts active in the polymerization and copolymerization of ethylene are obtained, which produce polymer having a relatively narrow molecular weight distribution. Compounds of tetravalent titanium, such as titanium tetrahalide compounds, are preferable transition metal compounds. A particularly preferable compound is titanium tetrachloride. The vanadium compounds, such as VCl₄ and VOCl₃, are usually added among the titanium tetrachloride to modify the molecular weight distribution.

During the actual activation or after it, so-called electron donor compounds, such as an aliphatic or aromatic carboxylic acid or an alkyl ester or an acid halide thereof, a cyclic ether, an aliphatic or aromatic ketone, an aliphatic or aromatic aldehyde, an aliphatic or aromatic nitrile, an aliphatic or aromatic amine or an aromatic phosphine or a mixture of these kinds of compounds, can be added to the procatalyst. Preferable internal electron donors are in particular the esters of aromatic carboxylic acids, e.g. di-isobuthyl phthalate DIBP and cyclic esters, e.g. tetrahydrofuran THF. When using DIBP the advantage is achieved that the crystallinity of the polymer produced in the prepolymerization stage, e.g. that of the poly-4-methyl-1-pentene, increases.

The actual activation of the preactivated complex particles of the carrier substance simply takes place by bringing the particles into contact with the transition metal compound and the optional electron donor. The treatment is preferably carried out at about 30 to 110°C and it preferably lasts for about 30 to 180 minutes. The result is, as to its morphology and chemical structure, a very usable procatalyst.

The procatalyst can, alternatively, still be improved by prepolymerizating onto its surface one or several suitable alpha-olefines. Hereby, e.g. those advantages are achieved that the polymerization is started in a more controlled manner and the mechanical durability of the catalyst particles is improved, whereby the feeding properties of the catalyst into the polymerization processes are improved.

It is preferable to carry out the prepolymerization directly in the preparation stage of the catalyst, whereby extra transfer and treatment stages are avoided, which can diminish the efficiency of the catalyst. Preferable monomers are unsaturated hydrocarbons having 5 to 12 carbon atoms and requiring a stereospecific catalyst or mixtures thereof. These are liquids at room temperature and normal pressure. Preferable monomers are 4-methyl-1-pentene and styrene.

As the cocatalyst of the prepolymerization stage can be chosen any suitable organometallic catalyst of the Ziegler-Natta catalyst system. Preferable compounds are of the form RₘAlX₃₋ₘ, in which R is an alkyl, cycloalkyl or aryl group having 1 to 10 carbon atoms, X is a halogen atom, e.g. Cl or Br, and m is 0, 1, 2, or 3. As suitable aluminum compounds can be mentioned the trialkylaluminums, such as trimethylaluminum, triethylaluminum, tri-isopropylaluminum, tri-isobuthylaluminum, trioctylaluminum, etc., dialkylaluminumhalides, such as diethylaluminum chloride, di-isopropylaluminum chloride, di-isobutyl-aluminum chloride, dioctylaluminum chloride, etc., alkylaluminumsesquihalides, etc. Of these, particularly the trialkylaluminums, such as triethyl and tri-isobuthylaluminum, are preferable.

It is preferable in the prepolymerization of a catalyst if the polymer surrounding the catalyst particles is stereospecific. The stereospecificity can be achieved by the addition of the above-described, so-called internal electron donor at the actual activation stage, but can also be achieved by adding to the organometallic compound used as the prepolymerization cocatalyst a so-called external donor. It can thus be seen that it is worth while aiming at stereospecifity even in the case that non-steric ethylene monomer is being polymerized.

An external electron donor, which is a straight-chain or branched compound containing heteroatoms, should be used in the prepolymerization. Preferable are compounds according to the formula (1): 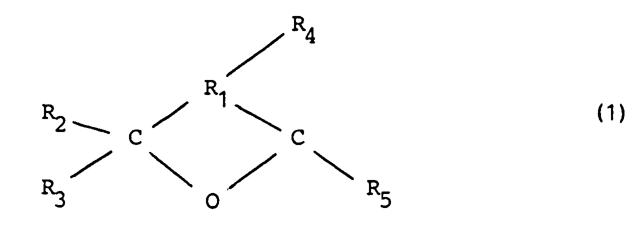
in which R₁ and R₄ are hydrocarbon groups having preferably 2-5 carbon atoms, R₂, R₃, and R₄ are each hydrocarbons or alkyl groups having preferably 2-5 carbon atoms. Preferable in particular are cineoles, such as 1,4-, 1,8- and m-cineole. An outside donor can also consist of a silicon compound, preferably aryl alkyl silane, particularly diphenyldimethoxy silane. The prepolymerization is carried out in the same manner as any prepolymerization of Ziegler-Natta catalyst particles known in the field. Hereby, a preferable aluminum/titanium proportion is 1-50, still more preferably 1-10, and the aluminum/donor proportion is preferably about 1-10, still more preferably about 1-5. The monomer/titanium proportion is about 10-200, preferably about 10-40. The polymerization is carried out at normal temperature and pressure, the temperature is 10-30°C and it lasts about 15-120 minutes, preferably about 15-30 minutes.

The invention is illustrated by the following examples:

### Preparation of the carrier

A spray crystallized, spheroidal carrier complex MgCl₂.3EtOH was prepared as follows:
Into a nitrogen purged autoclave of 110dm³ was charged 35kg of dry MgCl₂ and 65l of dry ethanol. This reaction mixture was melted at +110°C under agitation at the end. After an agitation of 2 hours the clear homogenized mixture was fed by spraying at a rate of 10kg/h in a cooled spray chamber, to which was led as cooling medium nitrogen being at the temperature -20°C. As a nozzle a gas-liquid-fluidisizing nozzle with the diameter of 9mm was used. As spraying gas was used dried nitrogen at a temperature of +130°C with a feed rate of 40 kg/h. The product was free flowing and in the form of spheroidal particles.

### Example 1

### A. Preactivation of the carrier

5g of the above-mentioned carrier complex MgCl₂.EtOH containing 65 millimols of EtOH was weighed to a reactor of 250ml furnished with an agitator, a reflux condenser, a thermometer and a nitrogen stopper. To the reactor was added 30ml pentane dried on molecular sieves. The mixture was cooled to -10°C and into the reactor was dropped from a drop funnel 114ml (70 millimols TEA) 10 % by weight triethylaluminum having pentane as solvent. The temperature was raised to the boiling point 36°C of pentane and was kept there for an hour.

The preactivated carrier obtained was washed five times with 3ml amounts of pentane at room temperature and was left in the last washing solution.

### B. Activation with titanium tetrachloride

The carrier precipitate obtained above was cooled to -10°C and to the reactor was added 0.8ml (7mmol) TiCl₄. The temperature was raised to the boiling point of pentane and was kept there for an hour. The catalyst precipitate was washed at room temperature three times with 30ml pentane and was left in the last washing solution.

The composition of the separated catalyst component sample dried with nitrogen gas was:
Ti 7.2%, Mg 15.0%, Al 2.4% and Cl 64.8%.

### C. Prepolymerization

The catalyst component obtained above was prepolymerized as follows:
To the above-mentioned mixture was added 10% by weight triisobutylaluminum in pentane 113ml (40 mmol TIBA) and cineole 1.22ml (7mmol), so the molar ratio Al/cineole was 5.5. The reaction mixture was agitated at room temperature for 10 minutes. To the mixture was added slowly 4-methyl-1-pentene 18.5ml (0.15 mol). The agitation was continued for one hour, after which the precipitate was washed three times with pentane and dried with nitrogen. 8.0g of prepolymerized catalyst was obtained and it contained Mg 5.1% by weight, Ti 1.6% by weight, and Al 1.7% by weight.

### Example 2

### A. The carrier was preactivated as in Example 1.

### B. Activation with titanium tetrachloride.

The preactivated carrier was washed four times with 100ml heptane at room temperature and was left in the last washing liquid. 40ml of TiCl was added into it and the temperature was raised to 110°C for two hours. The precipitate obtained was washed four times with 100ml heptane at 80°C and once with 100ml pentane and dried with nitrogen. The yield of the titanated component was 2.8g and its composition was: Mg 10.3% by weight, Ti 14.8% by weight, Al 1.4% by weight and Cl 69.6% by weight.

### C. Prepolymerization

The catalyst component obtained above (1g) was prepolymerized in the manner described in Example 1, the molar proportions of the components being the following: 4-methyl-1-pentene/Ti=30 and Al/cineole=5. The yield of the prepolymerized catalyst was 1.78g.

### Example 3

### A. The carrier was preactivated as in example 1.

### B. Activation with titanium tetrachloride

After the preactivation stage 200ml of dry heptane, 10 ml (0.09 mole) of TiCl₄ and 2.8ml (0.01 mole) di-isobutylphthalate (DIBP) was added onto the carrier at room temperature. After this the temperature was raised to 90°C for one hour, after which the precipitate obtained was washed four times with 200ml of heptane and once with 200ml of pentane and dried by nitrogen blowing. The yield of the solid catalyst component was 9.3g and it contained: Mg 4.9%, Ti 10.6%, Al 0.9%, Cl 48.4% and DIBP 31.2%.

### C. Prepolymerization

2g of the catalyst component obtained was prepolymerized in the manner described in Example 1 and the yield of the prepolymerized catalyst was 1.75g.

### Example 4

### A. The carrier was preactivated as in Example 1.

### B. Activation with titanium tetrachloride

Onto the activated carrier precipitate was added 200ml of heptane and 25ml of tetrahydrofuran in which 1g of TiCl₄.2THF complex had been dissolved. The product obtained was agitated in four hours at room temperature and dried with nitrogen flow. The yield of the catalyst component was 7.1g and it contained: Mg 8.9%, Ti 1.4%, Cl 40.5% and THD 59.3%.

### Polymerization method

### 1. Test polymerization of ethylene.

To a three liter reactor was added two liters of pentane, which had been purified with active aluminum oxide and molecular sieves. 20-100mg of the catalyst, dissolved in a little amount of pentane, is fed from a feed ampoule and the temperature is raised to 80°C. 5ml of triethylaluminum in a 10% by weight solution is used as a cocatalyst.

A vessel of 0.51 is pressurised with hydrogen to 5 bar. The pressurised hydrogen is then lead together with the aluminum alkyl and ethylene into the reactor. The total pressure in the reactor is raised with ethylene to 15 bar, the temperature to 90°C and the polymerization is continued for 60 to 90 minutes. During the polymerization ethylene gas is added in order to keep the pressure constant.

### 2. Copolymerization

The copolymerization of ethylene with alpha-olefins is carried out as the polymerization above, except that comonomer (4-methyl-1-pentene, 300ml) is added into the medium (1800ml of pentane) immediately after the addition of the catalyst.

### 3. Two-stage polymerization

Two-stage polymerization is carried out as follows: the first stage is like a usual test polymerization, except that the reactor is now pressurized with hydrogen (10 bar/0.51 vessel) and ethylene so that the total pressure is 11 bars. After a one and half hour reaction time the pressure is lowered to 2 bar and the reactor is repressurized by adding comonomer 120ml (4-methyl-1-pentene) and ethylene so that the total pressure is 16.5 bar; hydrogen is not added. The polymerization is continued for half an hour at a temperature of 70°C.

The melt indices of the polymers were measured with 21.6 and 2.16kg weights MI(21.6) and MI(2.16) according to the standard ASTM D 1238, condition 190/21.6) and condition 190/2.16. The melt flow ratio is the ratio of the melt indices MI(21.6) and MI(2.16).

The polymerization results when using the catalysts prepared in the various examples are presented in Table 1.

**Table 1**

| Example | KAT mg | G PE | AKT gPE/g | MI(21.6) kat h | MI(2.16) | Melt flow ratio | D g/ml |
|---|---|---|---|---|---|---|---|
| 1b | 25 | 743 | 29720 | 32.10 | 0.91 | 35.2 | |
| 1c | 85 | 382 | 2996 | 20.35 | 0.69 | 29.5 | |
| 1a c) | 52 | 460 | 8845 | 142.2 | 4.5 | 31.2 | 0.946 |
| 1a d) | 93 | 480 | 3440 | 2.03 | 0.02 | 83.00 | |
| 2b | 27 | 294 | 7270 | 5.3 | 0.16 | 34.1 | |
| 2a | 52 | 436 | 5589 | | | | |
| 3b | 29 | 545 | 12520 | 14.3 | 0.46 | 31.1 | |
| 3a | 54 | 696 | 8636 | 7.1 | 0.20 | 35.6 | |
| 4b | 50 | 68 | 902 | 14.8 | 0.55 | 26.8 | |
| 4a | 145 | 599 | 2753 | 15.2 | 0.63 | 24.0 | |
| b = before prepolymerization a = after prepolymerization c = copolymerization with 4-methyl-1-pentene d = two stage polymerization | | | | | | | |

### Gas phase polymerization

Catalyst prepared according to Example 1 was used for the polymerization of ethylene in gas phase with pilot equipment. Catalyst was fed at a rate of 3g/h to the gas phase reactor and the reaction was started by adding 10% by weight of triethylaluminum solution as cocatalyst. To the gas space was continuously led nitrogen 36% by volume, hydrogen 26% by volume and ethylene 38% by volume. The productivity of the catalyst was 5kg PE/g catalyst.

For the polyethylene obtained the following properties were measured: density 0.963g/ml, MI(2.16) = 7.5, ash content 300ppm, bulk density 470g/l, average particle size 1.6mm, tensile strength (according to ASTM D638) 26.1Mpa, HDT value (ASTM D 648) 74 C j Izod impact strength ASTM d256, 20 C) 42.

## Claims

1. A method for the preparation of a supported procatalyst suitable for the polymerization of olefins comprising:
a) forming particles of anhydrous and dry magnesium dihalide and alcohol;
b) reacting the particles with an organic compound of a metal from the groups 1A to 3A;
c) activating the particle product obtained from the stage b) by means of titanium and/or vanadium compound and optionally an electron donor; and
d) optionally carrying out a prepolymerization for the activated particles;
characterized in that the particles of the stage a) are formed by spray crystallization (spray freezing) a mixture of the magnesium dihalide and the alcohol into complex particles and then carrying out the stages b), c) and d) for the complex particles.

2. A method according to claim 1 characterized in that the spray crystallization of the stage a) is carried out by heating the alcohol-solvated magnesium dihalide to a homogeneous liquid and spraying the liquid by means of hot spray gas into a cooled spray chamber, where the complex particles of magnesium dihalide and alcohol are formed essentially without evaporation of the alcohol.

3. A method according to claim 1 or 2 characterized in that the magnesium dihalogenide is magnesium dichloride.

4. A method according to any preceding claim characterized in that the alcohol is an aliphatic alcohol, preferably dry ethanol or a dry mixture thereof.

5. A method according to any preceding claim characterized in that the organic compound is trialkylaluminium.

6. A method according to any preceding claim characterized in that the titanium compound is TiC1₄.

7. A method according to any preceding claim characterized in that the vanadium compound is VC1₄ or VOC1₃.

8. A method according to any preceding claim characterized in that the activation stage c) is carried out in the presence of an ester of an aromatic carboxylic acid, such as di-isobutyl phthalate, or a cyclic ester, such as tetrahydrofuran.

9. A method according to any preceding claim characterized in that the prepolymerization stage d) is carried out with an alpha-olefin, preferably at normal temperature and pressure in the presence of the activated particles and trialkylaluminium.

10. A method according to claim 9 characterized in that 4-methyl-pentene is used as the alpha-olefin in the prepolymerization stage d).

11. A method according to claims 9 or 10 characterized in that the prepolymerization stage d) is carried in the presence of an electron donor, preferably cineole.

12. The use of a procatalyst preparable by a method according to any of claims 1 to 11 in the polymerization or copolymerization of an olefin, such as ethylene with a narrow molecular weight distribution.

13. The use according to claim 12 characterized in that the polymerization is carried out in two or more stages having different hydrogen pressures for producing a polymer or copolymer of ethylene with a specific molecular weight distribution.

## Patentansprüche

1. Ein Verfahren zur Herstellung eines Prokatalysators auf einem Träger, geeignet für die Polymerisation von Olefinen, bestehend aus:
a) der Bildung von wasserfreien und trockenen Magnesiumdihalidteilchen und Alkohol;
b) der Reaktion der Teilchen mit einer organischen Verbindung eines Metalls aus den Gruppen 1A bis 3A;
c) der Aktivierung des aus Phase b) gewonnenen Teilchenproduktes mit Hilfe einer Titan- und/oder Vanadiumverbindung und wahlweise eines Elektronendonors; und
d) der wahlweisen Ausführung einer Vorpolymerisation für die aktivierten Teilchen;
dadurch gekennzeichnet, daß die Teilchen aus Phase a) durch Sprühkristallisation (Sprühgefrieren) einer Mischung des Magnesiumdihalids und des Alkohols in komplexe Teilchen gebildet werden und daß dann die Phasen b), c) und d) für die komplexen Teilchen ausgeführt werden.

2. Ein Verfahren nach Anspruch 1, dadurch gekennzeichnet, daß die Sprühkristallisation der Phase a) durch Erhitzen des alkoholsolvatisierten Magnesiumdihalids in eine homogene Flüssigkeit und Sprühen der Flüssigkeit mit Hilfe von heißem Sprühgas in eine gekühlte Sprühkammer ausgeführt wird, wo die komplexen Magnesiumdihalidteilchen und der Alkohol im wesentlichen ohne Verdampfen des Alkohols gebildet werden.

3. Ein Verfahren nach Anspruch 1 oder 2, dadurch gekennzeichnet, daß das Magnesiumdihalid Magnesiumdichlorid ist.

4. Ein Verfahren nach einem der vorstehenden Ansprüche, dadurch gekennzeichnet, daß der Alkohol ein aliphatischer Alkohol, vorzugsweise Trockenethanol oder eine trockene Mischung desselben ist.

5. Ein Verfahren nach einem der vorstehenden Ansprüche, dadurch gekennzeichnet, daß die organische Verbindung Trialkylaluminium ist.

6. Ein Verfahren nach einem der vorstehenden Ansprüche dadurch gekennzeichnet, daß die Titanverbindung TiCl₄ ist.

7. Ein Verfahren nach einem der vorstehenden Ansprüche, dadurch gekennzeichnet, daß die Vanadiumverbindung VCl₄ oder VOCl₃ ist.

8. Ein Verfahren nach einem der vorstehenden Ansprüche, dadurch gekennzeichnet, daß die Aktivierungsphase c) mit Vorhandensein eines Esters einer aromatischen Karbonsäure, wie zum Beispiel Di-Isobutylphtalat oder eines ringförmigen Esters, wie zum Beispiel Tetrahydrofuran, ausgeführt wird.

9. Ein Verfahren nach einem der vorstehenden Ansprüche, dadurch gekennzeichnet, daß die Vorpolymerisationsphase d) mit einem Alpha-Olefin, vorzugsweise bei normaler Temperatur und normalem Druck mit Vorhandensein der aktivierten Teilchen und des Trialkylaluminiums ausgeführt wird.

10. Ein Verfahren nach Anspruch 9, dadurch gekennzeichnet, daß 4-Methyl-Penten als Alpha-Olefin in der Vorpolymerisationsphase d) verwendet wird.

11. Ein Verfahren nach Anspruch 9 oder 10, dadurch gekennzeichnet, daß die Vorpolymerisationsphase d) mit Vorhandensein eines Elektronendonors, vorzugsweise Cineol, ausgeführt wird.

12. Die Verwendung eines Prokatalysators, der mit einem Verfahren nach einem der Ansprüche 1 bis 11 hergestellt werden kann, bei der Polymerisation oder Copolymerisation eines Olefins, wie zum Beispiel Ethylen mit niedriger Molekulargewichtsverteilung ausgeführt wird.

13. Die Verwendung nach Anspruch 12, dadurch gekennzeichnet, daß die Polymerisation in zwei oder mehr Phasen mit unterschiedlichen Wasserstoffdrücken für die Herstellung eines Ethylenpolymers oder -copolymers mit einer spezifischen Molekulargewichtsverteilung ausgeführt wird.

## Revendications

1. Procédé de préparation d'un procatalyseur supporté approprié à la polymérisation d'oléfines comprenant de :
a) former des particules de dihalogénure de magnésium anhydre et sec et d'alcool;
b) faire réagir les particules avec un composé organique de métal des groupes 1A à 3A;
c) activer le produit particulaire obtenu à l'étape b) au moyen d'un composé de titane et/ou de vanadium et éventuellement d'un donneur d'électron; et
d) réaliser éventuellement une prépolymérisation des particules activées;
caractérisé en ce que les particules de l'étape a) sont formées par cristallisation par pulvérisation (solidification par pulvérisation) d'un mélange de dihalogénure de magnésium et d'alcool pour donner des particules de complexe et ensuite on réalise les étapes b), c) et d) pour obtenir les particules de complexe.

2. Procédé selon la revendication 1, caractérisé en ce qu'on réalise la cristallisation par pulvérisation de l'étape a) en chauffant le dihalogénure de magnésium solvaté par de l'alcool dans un liquide homogène et en pulvérisant le liquide au moyen d'un gaz de pulvérisation chaud dans une chambre de pulvérisation refroidie, où les particules de complexe de dihalogénure de magnésium et d'alcool sont formées essentiellement sans évaporation de l'alcool.

3. Procédé selon la revendication 1 ou 2, caractérisé en ce que le dihalogénure de magnésium est du dichlorure de magnésium.

4. Procédé selon l'une quelconque des revendications précédentes, caractérisé en ce que l'alcool est un alcool aliphatique, de préférence de l'éthanol anhydre ou un de ses mélanges anhydres.

5. Procédé selon l'une quelconque des revendications précédentes, caractérisé en ce que le composé organique est du trialkylaluminium.

6. Procédé selon l'une quelconque des revendications précédentes, caractérisé en ce que le composé de titane est TiCl₄.

7. Procédé selon l'une quelconque des revendications précédentes, caractérisé en ce que le composé de vanadium est VCl₄ ou VOCl₃.

8. Procédé selon l'une quelconque des revendications précédentes, caractérisé en ce que l'étape d'activation c) est réalisée en présence d'un ester d'un acide carboxylique aromatique, tel que le phtalate de diisobutyle, ou un ester cyclique, tel que le tétrahydrofurane.

9. Procédé selon l'une quelconque des revendications précédentes, caractérisé en ce qu'on réalise l'étape de prépolymérisation d) avec une α-oléfine, de préférence à température ambiante et pression atmosphérique en présence des particules activées et de trialkylaluminium.

10. Procédé selon la revendication 9, caractérisé en ce qu'on utilise du 4-méthylpentène comme α-oléfine à l'étape de prépolymérisation d).

11. Procédé selon les revendications 9 ou 10, caractérisé en ce qu'on réalise l'étape de prépolymérisation d) en présence d'un donneur d'électron, de préférence le cinéole.

12. Utilisation d'un procatalyseur qu'on peut préparer par un procédé selon l'une quelconque des revendications 1 à 11 lors de la polymérisation et de la copolymérisation d'une oléfine, comme l'éthylène avec une répartition étroite de poids moléculaire.

13. Utilisation selon la revendication 12, caractérisée en ce qu'on réalise la polymérisation en deux étapes ou plus ayant différentes pressions d'hydrogène pour produire un polymère ou copolymère d'éthylène avec une distribution spécifique de poids moléculaire.
